# EUROPÄISCHE PATENTSCHRIFT

(11) **EP 1 216 987 B1**
(45) Veröffentlichungstag und Bekanntmachung des Hinweises auf die Patenterteilung: **01.10.2003**
(21) Anmeldenummer: 01128812.3
(22) Anmeldetag: 04.12.2001
(51) Int. Cl.: C07C 273/18, C08G 18/78, C08G 18/16

(54) **Verfahren zur Herstellung von hochfunktionellen aromatischen Polyisocyanaten**
Process for the preparation of highfunctionality aromatic polyisocyanates
Procédé pour la préparation de polyisocyanates aromatiques de haute fonctionnalité

(30) Priorität: 22.12.2000 DE 10064646
(43) Veröffentlichungstag der Anmeldung: 26.06.2002
(73) Patentinhaber: BASF AKTIENGESELLSCHAFT, 67056 Ludwigshafen (DE)
(72) Erfinder: Murrar, Imbridt, 01968 Senftenberg (DE); Plaumann, Heinz, Dr., 01987 Schwarzheide (DE); Winkler, Jürgen, 01987 Schwarzheide (DE); Schuster, Marita, 01968 Senftenberg (DE)

(56) Entgegenhaltungen:
- DE-B- 1 101 394
- US-A- 5 641 851

## Beschreibung

Die Erfindung betrifft ein Verfahren zur Herstellung von hochfunktionellen aromatischen Polyisocyanaten durch Umsetzung von aromatischen Polyisocyanaten, gegebenenfalls im Gemisch mit weiteren Mono- und/oder Polyisocyanaten, unter Zusatz katalytisch wirkender saurer Substanzen und Wasser.

Die Herstellung von hochfunktionellen aromatischen Polyisocyanaten durch direkte Umsetzung von aromatischen Polyisocyanaten im stöchiometrischen Überschuss mit Wasser ist hinlänglich bekannt und in der Fachlitaratur (z. B. Kunststoff Handbuch, Bd. 7: Polyurethane, Becker/Braun, 3. Auflage, 1993, Carl Hanser Verlag München, Seite 76 ff) sowie in Patentschriften vielfach beschrieben.

DE-A-2032174 beschreibt die Herstellung von aromatischen Polyisocyanaten durch Umsetzung von monomerem Polyisocyanat im Überschuss mit Wasser in Gegenwart von Emulgatoren, wie Rizinuspolyethylenglykolether mit einer OH-Zahl von 50 mg KOH/g. Die Umsetzung der Isocyanat-Harnstoff-Suspension erfolgt thermisch durch 3-stündiges Rühren bei 170°C.

DD-A-151159 beansprucht ein Verfahren zur Herstellung von Polyisocyanaten, wonach Di- und/oder Triisocyanate oder disubstituierte Harnstoffisocyanate, die aus Isocyanaten synthetisiert werden, mit Wasser in Gegenwart von Organozinnverbindungen des Typs (R₃Sn)₂O, wie Bis-(tributylzinn)-oxid, und gegebenenfalls eines Lösungsmittels zwischen 50 °C und 120 °C zur Reaktion gebracht werden.

DE-A-3526233 beschreibt ein Verfahren zur Herstellung von modifizierten Polyisocyanaten durch Umsetzung von Polyisocyanaten im Überschuss mit einem Gemisch aus Aminogruppen enthaltenden Polyether- oder Polyesteralkoholen und Wasser.

GB-A-1078390 offenbart die Bildung von speziellen Polyisocyanaten direkt aus Diaminen und aromatischen Polyisocyanaten, indem man diese Reaktion in Lösungsmitteln, deren Siedepunkt unter dem Siedepunkt des Polyisocyanates liegt, durchführt und im Anschluss an die Reaktion das Lösungsmittel durch Destillation entfernt.

DE-A-19707576 beschreibt ein einstufiges Verfahren zur Herstellung von Polyisocyanaten, bei dem aromatische Diisocyanate mit aromatischen Diaminen in einem Molverhältnis von mindestens 8 : 1 in einer beheizbaren Mischkammer kontinuierlich zusammengeführt und bei einer Temperatur oberhalb 180 °C und einer Verweilzeit von maximal 60 Sekunden zur Reaktion gebracht werden.

PL 134633 beschreibt ein Verfahren zur Herstellung von Polyisocyanaten durch Umsetzung von Polyisocyanaten mit Wasser in Gegenwart von halogensubstituierten-Estern der Phosphorsäure, wie Di-(β-chlorethyl)phosphat, Tri-(2,3-dichlorpropyl)phosphat, Chlor- oder Bromtrixylylphosphat, oder halogenenthaltenden Phosphorsäurepolymerestern und deren Einsatz bei der Herstellung von Polyurethan-Schaumstoffen.

Die nach dem Stand der Technik herstellbaren hochfunktionellen Polyisocyanate weisen folgende Nachteile auf: Es treten Nebenreaktionen, die die Bildung hochmolekularer unlöslicher Polyisocyanatderivate verursachen (siehe auch "Saunders, Frisch: Polyurethanes, Chemistry and Technology, Bd. 1 und 2, Interscience, New York 1962, High Polymers, Bd. 16"), lange Reaktionszeiten und hohe Viskositäten auf. Darüber hinaus sind aufwendige technologische Verfahrensschritte, wie die Synthese spezieller aminogruppenhaltiger Polyether- oder Polyesteralkohole als Einsatzstoffe, spezielle Mischreaktorkonstruktionen sowie der Einsatz von Lösungsmitteln und zusätzliche Verfahrensschritte zu deren Entfernung erforderlich. Infolge unvollständiger Lösungsmittel-Abtrennung sind Einbußen bei physikalischen Eigenschaften im Polyurethan-Endprodukt, schlechte Durchmischung, dunkle Produkte durch hohe thermische Beanspruchung, Unverträglichkeiten mit der A-Komponente, Phasenbildung beim Verschäumen und damit Einbußen an Elastizität, Härte und Tragfähigkeit bei den Polyurethan-Weichschaumstoffen hinzunehmen.

Der Erfindung lag damit die Aufgabe zugrunde, ein lösungsmittelfreies Verfahren zur Herstellung von hochfunktionellen aromatischen Polyisocyanaten durch Umsetzung von Polyisocyanaten und Wasser unter Zusatz von katalytisch wirkenden sauren Substanzen zu entwickeln, wobei die modifizierten hochfunktionellen Polyisocyanate mittlere Verarbeitungsviskositäten, eine verbesserte Farbe und eine gute Systemverträglichkeit in der A-Komponente aufweisen sollten. Bei der Verarbeitung solcher Komponenten sollten ohne Phasenbildung Polyurethan-Weichschaumstoffe hoher Elastizität und hoher Tragfähigkeit insbesondere für die Anwendung im Automobil- und Möbelindustriebereich herstellbar sein.

Erfindungsgemäß wird die Aufgabe dadurch gelöst, dass als aromatisches Polyisocyanat mindestens ein Toluylendiisocyanat und als katalytisch wirkende saure Substanz mindestens ein Alkyl- und/oder Aralkylphosphat eingesetzt werden und man das Verfahren so durchführt, dass die Zugabe des Wassers mit einer Temperatur/Zeit-Gradient-Steigerung von 5 bis 60°/Stunde bis zu einer Einstellung eines Isocyanat-Modifizierungsgrades der Ausgangs-NCO-Endgruppen von 1 bis 80 % erfolgt.

Gegenstand der Erfindung ist demzufolge ein Verfahren zur Herstellung von hochfunktionellen aromatischen Polyisocyanaten durch Umsetzung von aromatischen Polyisocyanaten, gegebenenfalls im Gemisch mit weiteren Mono- und/oder Polyisocyanaten, unter Zusatz katalytisch wirkender saurer Substanzen und Wasser, das dadurch gekennzeichnet ist, dass als aromatische Polyisocyanate mindestens ein Toluylendiisocyanat und als katalytisch wirkende saure Substanz mindestens ein Alkyl- und/oder Aralkylphosphat eingesetzt werden und man das Verfahren so durchführt, dass die Zugabe des Wassers mit einer Temperatur/Zeit-Gradient-Steigerung von 5 bis 60°/Stunde bis zu einer Einstellung eines Isocyanat-Modifizierungsgrades der Ausgangs-NCO-Endgruppen von 1 bis 80 % erfolgt.

Gegenstände der Erfindung sind weiterhin die nach diesem Verfahren hergestellten hochfunktionellen aromatischen Polyisocyanate selbst sowie deren Verwendung zur Herstellung von PolyurethanSchaumstoffen, insbesondere Polyurethan-Weichschaumstoffen.

Erfindungsgemäß wird als aromatisches Polyisocyanat mindestens ein Toluylendiisocyanat (nachstehend auch TDI genannt) eingesetzt. Vorzugsweise verwendet wird technisch verfügbares TDI, beispielsweise 2,4'- und 2,6'-TDI in technisch verfügbaren Isomerenverhältnissen, wie TDI 100, TDI 80 oder TDI 65. Besonders bevorzugt wird TDI 80.

Das erfindungsgemäß eingesetzte TDI kann im Gemisch mit weiteren aromatischen Mono- und/oder Polyisocyanaten und/oder aliphatischen Mono- und/oder Polyisocyanaten und/oder cycloaliphatischen Mono- und/oder Polyisocyanaten verwendet werden.

Als weitere aromatische Mono- und/oder Polyisocyanate kommen beispielsweise in Betracht: Phenylisocyanat, 4,4'-, 2,4'- und 2,2'-Diphenylmethandiisocyanat und die entsprechenden Isomerengemische, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI).

Als aliphatische Mono- und/oder Polyisocyanate kommen beispielsweise in Betracht: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6.

Als cycloaliphatische Mono- und/oder Polyisocyanate können beispielsweise eingesetzt werden: Cyclohexan-1,3- und -1,4-diisocyanat, 1-Isocyanato-3,3,5-trimethyl-5-isocyanatomethylcyclohexan (IPDI), 2,4- und 2,6-Hexahydrotoluylendiisocyanat, 4,4'-, 2,2'und 2,4'-Dicyclohexylmethandiisocyanat.

Geeignet sind auch modifizierte aromatische, aliphatische und cycloaliphatische Polyisocyanate sowie Prepolymere, die durch chemische Umsetzung organischer Di- und/oder Polyisocyanate erhalten werden. Beispielhaft genannt seien Ester-, Harnstoff-, Allophanat-, Carbodiimid-, Isocyanurat-, Uretdion- und/oder Urethangruppen enthaltende Di- und/oder Polyisocyanate. Im Einzelnen kommen beispielsweise in Betracht: modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, Urethangruppen enthaltende organische, vorzugsweise aromatische Polyisocyanate mit NCO-Gehalten von. 50 bis 15 Gew.-%, vorzugsweise von 31 bis 21 Gew.-%, bezogen auf das Gesamtgewicht, beispielsweise Umsetzungsprodukte mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, wobei diese Di- bzw. Polyoxyalkylenglykole einzeln oder als Gemische eingesetzt werden können. Beispielsweise genannt seien: Diethylen-, Dipropylenglykol, Polyoxyethylen-, Polyoxypropylen- und Polyoxypropylenpolyoxyethylenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus Polyester- und/oder Polyetherpolyolen und 4,4'-Diphenylmethandiisocyanat, Mischungen aus 2,4'- und 4,4'-Diphenylmethandiisocyanat, 2,4'- und/oder 2,6'-Toluylendiisocyanaten oder Roh-MDI.

Die aromatischen, aliphatischen, cycloaliphatischen und modifizierten Mono- und/oder Polyisocyanate können einzeln oder in beliebigen Mischungen untereinander mitverwendet werden. Werden neben TDI solche Isocyanate eingesetzt, dann vorzugsweise in Mengen von höchstens 85 Gew.-%, vorteilhafterweise von 5 bis 60 Gew.-%.

Als katalytisch wirkende saure Substanzen werden beispielsweise eingesetzt: Mono-, Di- oder/und Trialkyl(aralkyl)ester der Phosphorsäure, wie Bis-(2-ethylhexyl)phosphat, Dihexyldecylphosphat, Dibutylphosphat, Dipropylphosphat und besonders bevorzugt Bis-(2-ethylhexyl)phosphat. Die katalytisch wirkenden sauren Substanzen können einzeln oder in beliebigen Mischungen untereinander verwendet werden.

Die Gesamteinsatzmenge an katalytisch wirkenden sauren Substanzen beträgt vorzugsweise 0,001 bis 3,0 Gew.-%, insbesondere 0,01 bis 1,0 Gew.-%, jeweils bezogen auf das Gewicht der Gesamtrezeptur.

Der Reaktionspartner Wasser wird in Form von freiem Wasser, Kristallwasser abgebenden Substanzen, wasserabspaltenden Substanzen oder Wasserdampf eingesetzt. Der Wassereinsatz der verschiedenen Formen kann untereinander auch kombiniert werden. Besonders bevorzugt kommen freies Wasser oder Wasserdampf zur Anwendung.

Als Kristallwasser abgebende Substanzen eignen sich beispielsweise Aquokomplexe, wie Kupfersulfat-5-Wasser, 3-Kadmiumsulfat-8-Wasser, Kristallsoda, Eisensulfat-7-Wasser und Kalium-Aluminiumsulfat-12-Wasser.

Als wasserabspaltende Substanzen sind beispielsweise tert.-Butanol oder Salicylsäure einsetzbar.

Die Gesamteinsatzmenge an Wasser beträgt vorzugsweise 0,005 bis 0,03 g / g Polyisocyanat, besonders bevorzugt 0,01 bis 0,026 g /g Polyisocyanat.

Das Verfahren wird erfindungsgemäß so durchgeführt, dass die Zugabe des Wassers mit einer Temperatur/Zeit-Gradient-Steigerung von 5 bis 60°/Stunde bis zu einer Einstellung eines Isocyanat-Modifizierungsgrades der Ausgangs-NCO-Endgruppen von 1 bis 80 % erfolgt.

Das Verfahren kann bezüglich der Reihenfolge der Vorlage bzw. Zugabe der Ausgangskomponenten variiert werden.

Nach einer vorteilhaften Verfahrensvariante werden das Toluylendiisocyanat bzw. das Isocyanatgemisch und die katalytisch wirkenden sauren Substanzen vorgelegt und danach das Wasser mit der erfindungsgemäßen Temperatur/Zeit-Gradient-Steigerung von 5 bis 60°/h, vorzugsweise 9 bis 40°/h, bis zu einem Isocyanat-Modifizierungsgrad der Ausgangs-NCO-Endgruppen von 1 bis 80 %, vorzugsweise 8 bis 60 %, zudosiert.

Weiterhin ist es vorteilhaft, zunächst das Toluylendiisocyanat bzw. das Isocyanatgemisch oder die katalytisch wirkenden sauren Substanzen vorzulegen, danach die jeweils andere Komponente innerhalb von 0,01 bis 2,5 h, vorzugsweise von 0,03 bis 1,5 h, mit einer Temperatursteigerung von bis zu 100°, vorzugsweise von 35 bis 85°, zuzudosieren und anschließend die Wasserzugabe in dem erfindungsgemäß vorgeschriebenen Temperatur/Zeit-Regime, vorzugsweise mit einer Temperatur/Zeit-Gradient-Steigerung von 9 bis 40°/h bis zu einem Isocyanat-Modifizierungsgrad der Ausgangs-NCO-Endgruppen von vorzugsweise 8 bis 60 %, vorzunehmen.

Die erfindungsgemäß hergestellten hochfunktionellen aromatischen Polyisocyanate enthalten vorzugsweise 15 bis 95 Gew.-Teile, insbesondere 20 bis 85 Gew.-Teile, des modifizierten hochfunktionellen Polyisocyanates und 85 bis 5 Gew.-Teile, insbesondere 80 bis 15 Gew.-Teile, Toluylendiisocyanat und/oder Monomere und/oder Polymere des eingesetzten Isocyanatgemisches. Der Anteil an hochfunktionellen aromatischen Polyisocyanaten hängt vom eingestellten Isocyanat-Modifizierungsgrad ab.

Die erfindungsgemäß hergestellten hochfunktionellen aromatischen Polyisocyanate enthalten vorzugsweise ≤ 8 Gew.-Teile Harnstoff und höhermolekulare Oligomere und ≤ 2 Gew.-Teile Uretdion und höhermolekulare Oligomere.

Die erfindungsgemäßen hochfunktionellen aromatischen Polyisocyanate weisen vorzugsweise einen Gehalt an freien NCO-Gruppen von 35 bis 39 Gew.-%, eine Viskosität von 3 bis 6000 mPa·s, insbesondere von 50 bis 150 mPa·s, jeweils gemessen bei 25 °C, eine mittlere Funktionalität von 2,6 bis 3,2, ein mittleres Molekulargewicht von 300 bis 600, insbesondere von 425 bis 475 g/mol und eine Farbzahl von höchstens 10 Jod, vorteilhafterweise höchstens 2 Jod auf.

Das erfindungsgemäße Verfahren zeichnet sich durch folgende Vorteile aus: Nach einem lösungsmittelfreien Herstellungsverfahren können mit hoher Raum / Zeit-Ausbeute überraschend farbverbesserte hochfunktionelle aromatische Polyisocyanate mit einer mittleren Viskosität hergestellt werden. Ein besonderer Vorteil des Verfahrens liegt in der hohen Langzeitstabilität der erhaltenen hochfunktionellen aromatischen Polyisocyanate, die eine optimale Verarbeitung garantieren. Ganz besonders vorteilhaft ist die hervorragende Tieftemperaturstabilität des Produktes. Die erfindungsgemäßen hochfunktionellen aromatischen Polyisocyanate besitzen einen Schmelzbereich von -20 bis +11°C und eine Glastemperatur von -80 bis -70°C.

Es können wegen der mittleren Viskosität beliebige Isocyanatmischungen hergestellt und auf üblichen Schäummaschinen verarbeitet werden.

Bei Verwendung der hochfunktionellen aromatischen Polyisocyanate ist es überraschend möglich, Polyurethan-Systeme ohne Entmischungen, bei guter Systemverträglichkeit mit allen eingesetzten Rohstoffen herzustellen und zuverarbeiten. Es werden damit hochfunktionelle aromatische Polyisocyanate bereitgestellt, die in Polyurethananwendungen, vorzugsweise in Schaumstoffen, besonders vorteilhaft in Polyurethan-Weichschaumstoffen für den Automobilund Möbelindustriebereich verwendet werden können.

Zur Herstellung von Polyurethan-Weichschaumstoffen werden die erfindungsgemäßen hochfunktionellen aromatischen Polyisocyanate, gegebenenfalls im Gemisch mit weiteren organischen und/oder modifizierten organischen Polyisocyanaten (a), mit gegenüber Isocyanaten reaktive Wasserstoffatome aufweisenden Verbindungen (b) in Gegenwart von Wasser und/oder anderen Treibmitteln (c), Katalysatoren (d) und gegebenenfalls weiteren Hilfs- und Zusatzstoffen (e) nach üblichen Verfahren umgesetzt.

Zu den Ausgangskomponenten ist im Einzelnen Folgendes auszuführen:

Falls neben den erfindungsgemäßen hochfunktionellen aromatischen Polyisocyanaten weitere organische und/oder modifizierte organische Polyisocyanate (a) eingesetzt werden, kommen die an sich bekannten aliphatischen, cycloaliphatischen, araliphatischen und vorzugsweise aromatischen Isocyanate mit einer Funktionalität ≥ 2 in Frage, wie sie beispielsweise weiter oben bereits beschrieben wurden.

Werden weitere Polyisocyanate mitverwendet, dann in einem Anteil von höchstens 95 Gew.-%, vorzugsweise 15 bis 85 Gew.-%, bezogen auf das Gesamtgewicht der eingesetzten Polyisocyanate.

Als gegenüber Isocyanaten reaktive Wasserstoffatome aufweisende Verbindungen (b) werden zweckmäßigerweise solche mit einer Funktionalität von 2 bis 8, vorzugsweise 2 bis 3, und einem mittleren Molekulargewicht von 300 bis 8000, vorzugsweise von 300 bis 5000, verwendet.

Beispielsweise können eingesetzt werden Polyole, ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonate, oder Mischungen aus mindestens zwei der genannten Polyole. Die Hydroxylzahl der Polyhydroxylverbindungen beträgt dabei in aller Regel 20 bis 80 und vorzugsweise 28 bis 60. Daneben können beispielsweise auch Polyetherpolyamine eingesetzt werden.

Die verwendeten Polyetherpolyole werden nach bekannten Verfahren, beispielsweise durch anionische Polymerisation mit Alkalihydroxiden, wie z. B. Natrium- oder Kaliumhydroxid, oder Alkalialkoholaten, wie z. B. Natrium- oder Kaliummethylat oder Kaliumisopropylat, als Katalysatoren und unter Zusatz mindestens eines Startermoleküls, das 2 bis 8, vorzugsweise 2 bis 3, reaktive Wasserstoffatome gebunden enthält, oder durch kationische Polymerisation mit Lewissäuren, wie Antimonpentachlorid, Borfluorid-Etherat u. a., oder Bleicherde als Katalysatoren oder durch Doppelmetallcyanidkatalyse aus einem oder mehreren Alkylenoxiden mit 2 bis 4 Kohlenstoffatomen im Alkylenrest hergestellt. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3'-, 2,4'- und 2,6'-Toluylendiamin und 4,4'-, 2,4'- und 2,2'-Diaminodiphenylmethan. Als Startermoleküle kommen ferner in Betracht: Alkanolamine, wie z. B. Ethanolamin, N-Methyl- und N-Ethylethanolamin, Dialkanolamine, wie z.B. Diethanolamin, N-Methyl- und N-Ethyldiethanolamin, und Trialkanolamine, wie z. B. Triethanolamin, und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan, Pentaerythrit.

Die Polyetherpolyole, vorzugsweise Polyoxypropylen- und Polyoxypropylenpolyoxyethylenpolyole, besitzen eine Funktionalität von vorzugsweise 2 bis 8 und insbesondere 2 bis 3 und Molekulargewichte von 300 bis 8000, vorzugsweise 300 bis 6000 und insbesondere 1000 bis 5000 und geeignete Polyoxytetramethylenglykole ein Molekulargewicht bis ungefähr 3500.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z. B. im Gewichtsverhältnis 90:10 bis 10:90, vorzugsweise 70:30 bis 30:70, zweckmäßigerweise in den vorgenannten Polyetherpolyolen analog den Angaben der deutschen Patentschriften 1111394, 1222669 (US 3304273, 3383351, 3523093), 1152536 (GB 1040452) und 1152537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z. B. Polyharnstoffe, Polyhydrazide, tert.-Aminogruppen gebunden enthaltende Polyurethane und/oder Melamin. Solche Polyetherpolyole werden z. B. beschrieben in EP-B-011752 (US 4304708), US-A-4374209 und DE-A-3231497.

Die Polyetherpolyole können einzeln oder in Form von Mischungen verwendet werden.

Neben den beschriebenen Polyetherpolyolen können beispielsweise auch Polyetherpolyamine und/oder weitere Polyole, ausgewählt aus der Gruppe der Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole verwendet werden. Die Hydroxylzahl der Polyhydroxylverbindungen beträgt dabei in aller Regel 20 bis 80 und vorzugsweise 28 bis 56.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, nach üblichen Verfahren hergestellt werden. Üblicherweise werden die organischen Polycarbonsäuren und/oder -derivate und mehrwertigen Alkohole, vorteilhafterweise im Molverhältnis von 1:1 bis 1,8, vorzugsweise von 1:1,05 bis 1,2, katalysatorfrei oder vorzugsweise in Gegenwart von Veresterungskatalysatoren, zweckmäßigerweise in einer Atmosphäre aus Inertgas, wie z. B. Stickstoff, Kohlenmonoxid, Helium, Argon u. a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert.

Als hydroxylgruppenhaltige Polyacetale kommen z. B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z. B. Diphenylcarbonat, oder Phosgen hergestellt werden können. Zu den Polyesteramiden zählen z. B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).

Die Polyurethanweichschaumstoffe können ohne oder unter Mitverwendung von Kettenverlängerungs- und/oder Vernetzungsmitteln hergestellt werden, wobei diese in der Regel aber nicht erforderlich sind. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z. B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Polyurethanschaumstoffe Kettenverlängerungsmittel, Vernetzungsmittel oder Mischungen davon Anwendung finden, kommen diese zweckmäßigerweise in einer Menge bis zu 10 Gew.-%, bezogen auf das Gewicht der Polyolverbindungen, zum Einsatz.

Die Verbindungen der Komponente (b) können einzeln oder in Form von Mischungen verwendet werden.

Als Treibmittel (c) können die aus der Polyurethanchemie allgemein bekannten Fluorchlorkohlenwasserstoffe (FCKW) sowie hochund/oder perfluorierte Kohlenwasserstoffe verwendet werden. Der Einsatz dieser Stoffe wird jedoch aus ökologischen Gründen stark eingeschränkt bzw. ganz eingestellt. Neben HFCKW und HFKW bieten sich insbesondere aliphatische und/oder cycloaliphatische Kohlenwasserstoffe, insbesondere Pentan und Cyclopentan oder Acetale, wie z. B. Methylal, als Alternativtreibmittel an. Diese physikalischen Treibmittel werden üblicherweise der Polyolkomponente des Systems zugesetzt. Sie können jedoch auch in der Isocyanatkomponente oder als Kombination sowohl der Polyolkomponente als auch der Isocyanatkomponente zugesetzt werden. Möglich ist auch ihre Verwendung zusammen mit hoch- und/oder perfluorierten Kohlenwasserstoffen, in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, z.B. EP-A-0351614. Die eingesetzte Menge des Treibmittels bzw. der Treibmittelmischung liegt dabei bei 1 bis 25 Gew.-%, vorzugsweise 1 bis 15 Gew.-%, jeweils bezogen auf das Gesamtgewicht der Komponenten (b) bis (c).

Weiterhin ist es möglich und üblich, als Treibmittel der Polyolkomponente Wasser in einer Menge von 2 bis 8 Gew.-%, vorzugsweise 2,5 bis 4,0 Gew.-%, bezogen auf das Gesamtgewicht der Komponenten (b) bis (e), zuzusetzen. Der Wasserzusatz kann in Kombination mit dem Einsatz der anderen beschriebenen Treibmittel erfolgen.

Als Katalysatoren (d) zur Herstellung der Polyurethanweichschaumstoffe werden insbesondere Verbindungen verwendet, die die Reaktion der reaktiven Wasserstoffatome, insbesondere hydroxylgruppenenthaltender Verbindungen der Komponenten (b), (c) und (d), mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z. B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiam, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, l-Aza-bicyclo-(3,3,0)-octan und vorzugsweise 1,4-Diazabicyclo-(2,2,2)-octan, und Aminoalkanolverbindungen, wie Triethanolamin, Triisopropanolamin, N-Methyl- und N-Ethyldiethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination, bezogen auf das Gewicht der Aufbaukomponente (b) bis (f).

Der Reaktionsmischung zur Herstellung der erfindungsgemäßen Polyurethanweichschaumstoffe können gegebenenfalls noch weitere Hilfsmittel und/oder Zusatzstoffe (e) einverleibt werden. Genannt seien beispielsweise Flammschutzmittel, Stabilisatoren, Füllstoffe, Farbstoffe, Pigmente und Hydrolyseschutzmittel sowie fungistatisch und bakteriostatisch wirkende Substanzen.

Geeignete Flammschutzmittel sind beispielsweise Trikresylphosphat, Tris-(2-chlorethyl)phosphat, Tris-(2-chlorpropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Alumiumoxidhydrat, Antimontrioxid, Arsenoxid, Ammoniumpolyphosphat und Calciumsulfat, Blähgraphit oder Cyanursäurederivate, wie z.B.

Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im Allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Aufbaukomponenten (b) bis (e) zu verwenden.

Als Stabilisatoren werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate oder Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopoylsiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Als Stabilisatoren kommen vorwiegend Organopolysiloxane zur Anwendung, die wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden üblicherweise in Mengen von 0,01 bis 5 Gew.-Teilen, bezogen auf 100 Gew.-Teile der Komponenten (b) bis (e), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (e), einverleibt, wobei jedoch der Gehalt an Matten, Vliesen und Geweben aus natürlichen und synthetischen Fasern Werte bis 80 erreichen kann.

Nähere Angaben über die oben genannten anderen üblichen Hilfsund Zusatzstoffe sind der Fachliteratur, beispielsweise der Monographie von Saunders, Frisch: Polyurethanes, Chemistry and Technology, Bd. 1 und 2, Verlag Interscience, New York 1962, High Polymers, Bd. 16, oder dem oben zitierten Kunststoffhandbuch, Bd. 7: Polyurethane, Hanser-Verlag München, Wien, 1. bis 3. Auflage, zu entnehmen.

Zur Herstellung der erfindungsgemäßen Schäume werden die einzelnen Komponenten in solchen Mengen zur Umsetzung gebracht, dass das Äquivalenzverhältnis der NCO-Gruppen der Polyisocyanate zur Summe der reaktiven Wasserstoffatome der Komponenten (b) bis (e) 0,75 bis 1,25:1, vorzugsweise 0,90 bis 1,15:1, beträgt.

Polyurethanschaumstoffe nach dem erfindungsgemäßen Verfahren werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch das kontinuierliche Auftragen des Reaktionsgemisches auf geeignete Bandstraßen zur Erzeugung von Schaumblöcken.

Als besonders vorteilhaft hat es sich erwiesen, nach dem Zweikomponentenverfahren zu arbeiten und die Aufbaukomponenten (b) bis (e) zu einer sogenannten Polyolkomponente, oft auch als Komponente A bezeichnet, zu vereinigen und als Isocyanatkomponente, oft auch als Komponente B bezeichnet, die Polyisocyanate und gegebenenfalls Treibmittel (c) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 60°C und insbesondere 35 bis 55°C.

Unter Einsatz der erfindungsgemäß hergestellten hochfunktionellen aromatischen Polyisocyanate werden Polyurethan-Weichschaumstoffe mit einer Rohdichte von 30 kg/m³ bis 60 kg/m³ bei einem Gesamtwassergehalt von 2,8 Gew.-Teilen bis 4,0 Gew.-Teilen und einem Isocyanat-Index von 75 bis 115 erhalten.

Die hergestellten Polyurethan-Weichschaumstoffe haben eine hohe Tragfestigkeit und sind insbesondere für den hochbeanspruchten Einsatz im Automobil- und Möbelindustriebereich geeignet. Überraschend wurde gefunden, das durch den Einsatz der hochfunktionellen aromatischen Polyisocyanate die Weiterreißfestigkeit bei den Polyurethan-Weichschaumstoffen verbessert werden kann.

Die Erfindung wird anhand nachfolgender Beispiele erläutert.

Die in den Anwendungsbeispielen beschriebenen Umsetzungen wurden in einem 50 1-Reaktor mit Rührwerk, Wasserdosieranschluss und Anschluss für Stickstoff inertisierung (3 bar) durchgeführt.

### Beispiele 1 - 3

Es wurde TDI 80 (BASF: Lupranat® T 80 A) bei 20 °C vorgelegt und während einer Temperaturerhöhung um 45° die katalytisch wirkende saure Substanz Bis-(2-ethylhexyl)phosphat über einen Zeitraum bis zu 0,5 Stunden zudosiert. Danach wurde Wasser mit einer Temperatur/Zeit-Gradient-Steigerung von 15°/h bis zur Einstellung des in Tabelle 1 angegebenen Isocyanat-Modifizierungsgrades eingebracht.

### Vergleichsbeispiel 1

Im Unterschied zu der Beispielen 1 - 3 wird Wasser mit einer Temperatur/Zeit-Gradient-Steigerung von 3°/h bis zur Einstellung des in Tabelle 1 angegebenen Isocyanat-Modifizierungsgrades zugesetzt.

**Tabelle 1**

| | Vergleich 1 | Beispiel 1 | Beispiel 2 | Beispiel 3 |
|---|---|---|---|---|
| TDI [kg] | 49,1 | 48,7 | 49,1 | 49,5 |
| saure Substanz [g] | 50 | 50 | 50 | 50 |
| Wasser [kg] | 0,9 | 1,3 | 0,9 | 0,5 |
| NCO-Gehalt [Gew.-%] | 40,5 | 31,4 | 37,2 | 42,2 |
| Viskosität (25°C) [mPa·s] | 19 | 4.359 | 100 | 14 |
| Isocyanat-Modifizierungsgrad [%] | 16,0 | 34,8 | 22,8 | 12,4 |
| Farbzahl [Jod] | Nicht bestimmt! Produkt war trüb; keine vollständige Umsetzung | 2,3 | 1,0 | 0,8 |

### Beispiel 4

Es wurden 49,1 kg TDI 80 (BASF: Lupranat® T 80 A) und 50 g Bis-(2-ethylhexyl)phosphat gemeinsam bei 65°C vorgelegt. Danach wurden 900 g Wasser mit einer Temperatur/Zeit-Gradient-Steigerung von 15°/h bis zur Einstellung des in Tabelle 2 angegebenen Isocyanat-Modifizierungsgrades eingebracht. In Tabelle 2 wird die Entwicklung der Lagerstabilität bei 0°C, 25°C und 40°C über einen Zeitraum von 12 Wochen dargestellt.

**Tabelle 2**

| | Beispiel 4 | | | | | | |
|---|---|---|---|---|---|---|---|
| Lagerung | 1 Tag | 1 Woche | | | 12 Wochen | | |
| Temperatur | | 0°C | 25°C | 40°C | 0°C | 25°C | 40°C |
| NCO-Gehalt [%] | 37,4 | 37,3 | 37,3 | 37,2 | 37,2 | 37,1 | 37,1 |
| Viskosität 25°C [mPa·s] | 108 | 114 | 114 | 114 | 104 | 107 | 116 |
| Isocyanat-Modifizierungsgrad [%] | 22,4 | 22,6 | 22,6 | 22,8 | 22,8 | 23,0 | 23,0 |

### Beispiel 5

Eine Isocyanatmischung, hergestellt aus
50 Gew.-Teilen des erfindungsgemäßen hochfunktionellen aromatischen Polyisocyanates gemäß Beispiel 2,
30 Gew.-Teilen TDI 80 (BASF: Lupranat® T 80 A) und
20 Gew.-Teilen PMDI (BASF: Lupranat® M 20 A)
durch Homogenisieren bei Raumtemperatur in einem mit Stickstoff inertisierten Rührreaktor. In Tabelle 3 wird die Entwicklung der Lagerstabilität bei 0°C, 25°C und 40°C über einen Zeitraum von 12 Wochen dargestellt.

**Tabelle 3**

| | Beispiel 5 | | | | | | |
|---|---|---|---|---|---|---|---|
| Lagerung | 1 Tag | 1 Woche | | | 12 Wochen | | |
| Temperatur | | 0°C | 25°C | 40°C | 0°C | 25°C | 40°C |
| Freies NCO [%] | 39,9 | 39,7 | 39,7 | 39,6 | 39,7 | 39,7 | 39,7 |
| Viskosität 25°C [mPa·s] | 22 | 22 | 22 | 22 | 20 | 20 | 21 |

### Beispiele 6 und 7, Vergleichsbeispiel 2

Es wurden Polyurethan-Weichschaumstoffe auf der Basis der in Tabelle 4 aufgeführten Ausgangskomponenten hergestellt. In den Beispielen 6 und 7 wurde modifiziertes Polyisocyanat gemäß Beispiel 2 eingesetzt.

**Tabelle 4**

| | Vergleichsbeispiel 2 | Beispiel 6 | Beispiel 7 |
|---|---|---|---|
| A-Komponente | Polyetheralkohol 1 | 47,43 Gew.-Teile | |
| | Polyetheralkohol 2 | 46,00 Gew.-Teile | |
| | Zellöffner | 1,80 Gew.-Teile | |
| | Stabilisator | 0,60 Gew.-Teile | |
| | Katalysator 1 | 0,51 Gew.-Teile | |
| | Katalysator 2 | 0,11 Gew.-Teile | |
| | Vernetzer | 0,30 Gew.-Teile | |
| | Wasser | 3,10 Gew.-Teile | |
| B-Komponente | TDI 80 : PMDI = 62 : 38 Gew.-Teile | TDI 80 : PMDI : modifiziertes Polyisocyanat = 52 : 20 : 28 Gew.-Teile | TDI 80 : modifiziertes Polyisocyanat = 39 : 61 Gew.-Teile |
| Rohdichte [g/l] | 48 | 48 | 47 |
| Mechanische Kennwerte: | | | |
| Reißdehnung [%] | 110 | 105 | 120 |
| Zugfestigkeit [kPa] | 175 | 175 | 200 |
| Weiterreißfestigkeit [N/mm] | 0,57 | 0,64 | 0,76 |
| Stauchhärte [kPa] | 7 | 8 | 9,3 |
| DVR 50 %, bei 70°C und 22 h [%] | 3 | 4 | 4,6 |
| Rückprallelastizität [%] | 66 | 65 | 60 |
| Eindruckhärte [N] | 410 | 490 | 540 |

### DVR Druckverformungsrest

Polyetheralkohol 1 - Trifunktioneller Polyetheralkohol auf Basis Glyzerin/Propylenoxid/Ethylenoxid. OH-Zahl 35 mg KOH/g;
Polyetheralkohol 2 - Polymerpolyetheralkohol auf Basis Glyzerin/Propylenoxid/Ethylenoxid, Acrylnitril : Styren-Verhältnis = 1:1, Feststoffgehalt 30%, OH-Zahl 27 mg KOH/g;
Zellöffner - Trifunktioneller Polyetheralkohol auf Basis Glyzerin/Propylenoxid/Ethylenoxid, OH-Zahl 42 mg KOH/g;
Stabilisator - Tegostab B 4690;
Katalysator 1 - Dabco 33 LV;
Katalysator 2 - Niax A 1;
Vernetzer - Trifunktioneller Alkohol auf Basis Glyzerin, OH-Zahl 1740 mg KOH/g.

## Patentansprüche

1. Verfahren zur Herstellung von hochfunktionellen aromatischen Polyisocyanaten durch Umsetzung von aromatischen Polyisocyanaten, gegebenenfalls im Gemisch mit weiteren Mono- und/oder Polyisocyanaten, unter Zusatz katalytisch wirkender saurer Substanzen und Wasser, **dadurch gekennzeichnet, dass** als aromatische Polyisocyanate mindestens ein Toluylendiisocyanat und als katalytisch wirkende saure Substanz mindestens ein Alkyl- und/oder Aralkylphosphat eingesetzt werden und man das Verfahren so durchführt, dass die Zugabe des Wassers mit einer Temperatur/Zeit-Gradient-Steigerung von 5 bis 60°/Stunde bis zu einer Einstellung eines Isocyanat-Modifizierungsgrades der Ausgangs-NCO-Endgruppen von 1 bis 80 % erfolgt.

2. Verfahren nach Anspruch 1, **dadurch gekennzeichnet, dass** das Toluylendiisocyanat in technisch verfügbaren Isomerenverhältnissen, gegebenenfalls im Gemisch mit weiteren aromatischen Mono- und/oder Polyisocyanaten und/oder aliphatischen Monound/oder Polyisocyanaten eingesetzt wird.

3. Verfahren nach Anspruch 1 oder 2, **dadurch gekennzeichnet, dass** als katalytisch wirkende saure Substanz Bis-(2-ethylhexyl)phosphat eingesetzt wird.

4. Verfahren nach einem der Ansprüche 1 bis 3, **dadurch gekennzeichnet, dass** das Wasser in Form von freiem Wasser, Wasserdampf, einer Kristallwasser abgebenden Substanz und/oder einer wasserabspaltenden Verbindung eingesetzt wird.

5. Verfahren nach einem der Ansprüche 1 bis 4, **dadurch gekennzeichnet, dass** das Toluylendiisocyanat bzw. das Isocyanatgemisch und die katalytisch wirkenden sauren Substanzen vorgelegt werden und danach Wasser mit einer Temperatur/Zeit-Gradient-Steigerung von 9 bis 40 °/Stunde und bis zu einem Isocyanat-Modifizierungsgrad der Ausgangs-NCO-Endgruppen von 8 bis 60 % zudosiert wird.

6. Verfahren nach einem der Ansprüche 1 bis 5, **dadurch gekennzeichnet, dass** das Toluylendiisocyanat bzw. das Isocyanatgemisch oder die katalytisch wirkenden sauren Substanzen vorgelegt werden, danach die jeweils andere Komponente innerhalb von 0,01 bis 2,5 Stunden mit einer Temperatursteigerung von bis zu 100° zudosiert wird und anschließend die Wasserzugabe erfolgt.

7. Verfahren nach einem der Ansprüche 1 bis 6, **dadurch gekennzeichnet, dass** die Gesamteinsatzmenge an katalytisch wirkenden sauren Substanzen 0,001 bis 3,0 Gew.-%, bezogen auf das Gewicht der Gesamtrezeptur, beträgt.

8. Verfahren nach einem der Ansprüche 1 bis 7, **dadurch gekennzeichnet, dass** die Gesamteinsatzmenge an Wasser 0,005 bis 0,03 g / g Polyisocyanat beträgt.

9. Hochfunktionelle aromatische Polyisocyanate, herstellbar nach einem der Ansprüche 1 bis 8.

10. Hochfunktionelle aromatische Polyisocyanate gemäß Anspruch 9, enthaltend 15 Gew.-Teile bis 95 Gew.-Teile des modifizierten hochfunktionellen Polyisocyanates und 85 Gew.-Teile bis 5 Gew.-Teile Toluylendiisocyanat und gegebenenfalls Monomere und/oder Polymere des eingesetzten Isocyanatgemisches.

11. Hochfunktionelle aromatische Polyisocyanate gemäß Anspruch 9 oder 10, enthaltend höchstens 8 Gew.-Teile Harnstoff und höhermolekulare Oligomere und höchstens 2 Gew.-Teile Uretdion und höhermolekulare Oligomere.

12. Hochfunktionelle aromatische Polyisocyanate gemäß einem der Ansprüche 9 bis 11, **dadurch gekennzeichnet, dass** sie einen Gehalt an freien NCO-Gruppen von 35 bis 39 Gew.-%, eine Viskosität von 3 bis 6000 mPa·s bei 25 °C, eine mittlere Funktionalität von 2,6 bis 3,2, ein mittleres Molekulargewicht von 300 bis 600 g/mol und eine Farbzahl von höchstens 10 Jod aufweisen.

13. Verwendung der hochfunktionellen aromatischen Polyisocyanate gemäß einem der Ansprüche 9 bis 12 zur Herstellung von Polyurethan-Schaumstoffen, insbesondere Polyurethan-Weichschaumstoffen.

14. Verfahren zur Herstellung von Polyurethan-Weichschaumstoffen durch Umsetzung von organischen und/oder modifizierten organischen Polyisocyanaten (a) mit gegenüber Isocyanaten reaktive Wasserstoffatome aufweisenden Verbindungen (b) in Gegenwart von Wasser und/oder anderen Treibmitteln (c), Katalysatoren (d) und gegebenenfalls weiteren Hilfs- und Zusatzstoffen (e), **dadurch gekennzeichnet, dass** die Polyisocyanate (a) mindestens ein hochfunktionelles aromatisches Polyisocyanat gemäß einem der Ansprüche 9 bis 12 enthalten.

15. Polyurethan-Weichschaumstoffe, herstellbar nach Anspruch 14, **dadurch gekennzeichnet, dass** sie eine Rohdichte von 30 bis 60 kg/m³ bei einem Gesamtwassergehalt von 2 bis 8 Gew.-Teilen und einem Isocyanat-Index von 75 bis 115 aufweisen.

16. Verwendung der Polyurethan-Weichschaumstoffe gemäß Anspruch 15 im Automobil- und Möbelindustriebereich.

## Claims

1. A process for the preparation of highly functional aromatic polyisocyanates by reacting aromatic polyisocyanates, if required as a mixture with further mono- and/or polyisocyanates, with addition of catalytic acidic substances and water, wherein the polyisocyanates used comprise at least one tolylene diisocyanate and the catalytic acidic substance used is at least one alkyl and/or aralkyl phosphate, and the process is carried out in such a way that the water is added with a temperature/time gradient increase from 5 to 60°/hour and until an isocyanate modification of the starting NCO terminal groups of from 1 to 80% is established.

2. A process as claimed in claim 1, wherein the tolylene diisocyanate is used in industrially available isomer ratios, if required as a mixture with further aromatic mono- and/or polyisocyanates and/or aliphatic mono- and/or polyisocyanates.

3. A process as claimed in claim 1 or 2, wherein the catalytic acidic substance used is bis(2-ethylhexyl)phosphate.

4. A process as claimed in any of claims 1 to 3, wherein the water is used in the form of free water, steam, a substance releasing water of crystallization and/or a water-eliminating compound.

5. A process as claimed in any of claims 1 to 4, wherein the tolylene diisocyanate or the isocyanate mi-xture and the catalytic acidic substances are initially taken and water is then metered in with a temperature/time gradient increase from 9 to 40°/hour and to an isocyanate modification of the starting NCO terminal groups of from 8 to 60%.

6. A process as claimed in any of claims 1 to 5, wherein the tolylene diisocyanate or the isocyanate mixture or the catalytic acidic substances are initially taken, the respective other component is then metered in within from 0.01 to 2.5 hours with a temperature increase of up to 100° and the water is then added.

7. A process as claimed in any of claims 1 to 6, wherein the total amount of catalytic acidic substances used is from 0.001 to 3.0% by weight, based on the weight of the total formulation.

8. A process as claimed in any of claims 1 to 7, wherein the total amount of water used is from 0.005 to 0.03 g/g of polyisocyanate.

9. A highly functional aromatic polyisocyanate which can be prepared as claimed in any of claims 1 to 8.

10. A highly functional aromatic polyisocyanate as claimed in claim 9, containing from 15 to 95 parts by weight of the modified highly functional polyisocyanate and from 85 to 5 parts by weight of tolylene diisocyanate and, if required, monomers and/or polymers of the isocyanate mixture used.

11. A highly functional aromatic polyisocyanate as claimed in claim 9 or 10, containing not more than 8 parts by weight of urea and higher molecular weight oligomers and not more than 2 parts by weight of uretdione and higher molecular weight oligomers.

12. A highly functional aromatic polyisocyanate as claimed in any of claims 9 to 11, which contains from 35 to 39% by weight of free NCO groups and has a viscosity of from 3 to 6000 mPa·s at 25°C, and a mean functionality of from 2.6 to 3.2, an average molecular weight of from 300 to 600 g/mol and an iodine color number of not more than 10.

13. The use of a highly functional aromatic polyisocyanate as claimed in any of claims 9 to 12 for the production of polyurethane foams, in particular flexible polyurethane foams.

14. A process for the production of flexible polyurethane foams by reacting organic and/or modified organic polyisocyanates (a) with, compounds (b) having hydrogen atoms reactive toward isocyanates, in the presence of water and/or other blowing agents (c), catalysts (d) and, if required, further assistants and additives (e), wherein the polyisocyanates (a) contain at least one highly functional aromatic polyisocyanate as claimed in any of claims 9 to 12.

15. A flexible polyurethane foam which can be prepared as claimed in claim 14, wherein said foam has a density of from 30 to 60 kg/m³ in combination with a total water content of from 2 to 8 parts by weight and an isocyanate index of from 75 to 115.

16. The use of a flexible polyurethane foam as claimed in claim 15 in the automotive industry and furniture industry.

## Revendications

1. Procédé pour la production de polyisocyanates aromatiques hautement fonctionnels par réaction de polyisocyanates aromatiques, le cas échéant mélangés à d'autres mono et/ou polyisocyanates, sous addition de substances acides à activité catalytique et d'eau, **caractérisé en ce que** au moins un diisocyanate de toluyiène est mis en oeuvre comme polyisocyanates aromatiques et au moins un phosphate d'alkyle et/ou d'aralkyle comme substance acide à activité catalytique, et que l'on réalise le procédé de telle sorte que l'addition de l'eau est effectuée avec une augmentation du gradient de température/temps de 5 à 60° /heure jusqu'à un ajustement d'un degré de modification de l'isocyanate des groupes terminaux NCO initiaux de 1 à 80 %.

2. Procédé selon la revendication 1, **caractérisé en ce que** le diisocyanate de toluylène est mis en oeuvre dans des rapports isomériques techniquement disponibles, mélangé le cas échéant à d'autres mono et/ou polyisocyanates aromatiques et/ou mono et/ou polyisocyanates aliphatiques.

3. Procédé selon la revendication 1 ou 2, **caractérisé en ce que** du phosphate de bis (2-éthylhexyle) est mis en oeuvre comme substance acide à activité catalytique.

4. Procédé selon l'une des revendications 1 à 3, **caractérisé en ce que** l'eau est mise en oeuvre sous forme d'eau libre, de vapeur d'eau, libérant l'eau de cristallisation et/ou d'un composé produisant de l'eau.

5. Procédé selon l'une des revendications 1 à 4, **caractérisé en ce que** le diisocyanate de toluylène ou le mélange d'isocyanate et les substances acides à activité catalytique sont introduits au préalable et qu'ensuite de l'eau est ajoutée avec une augmentation du gradient de température/temps de 9 à 40° /heure et jusqu'à un degré de modification de l'isocyanate des groupes terminaux NCO initiaux de 8 à 60 %,.

6. Procédé selon l'une des revendications 1 à 5, **caractérisé en ce que** le diisocyanate de toluylène ou le mélange d'isocyanate ou les substances acides à activité catalytique sont introduits au préalable, l'autre composante respective est ensuite ajoutée en l'espace de 0,01 à 2,5 heures avec une augmentation de température allant jusqu'à 100° et l'addition d'eau est ensuite effectuée.

7. Procédé selon l'une des revendications 1 à 6, **caractérisé en ce que** la quantité de substances acides à activité catalytique mise en oeuvre est de 0,001 à 3,0 % en poids rapporté au poids de la composition totale.

8. Procédé selon l'une des revendications 1 à 7, **caractérisé en ce que** la quantité d'eau totale mise en oeuvre est de 0,005 à 0,03 g/g de polyisocyanate.

9. Polyisocyanates aromatiques hautement fonctionnels pouvant être produits selon l'une des revendications 1 à 8.

10. Polyisocyanates aromatiques hautement fonctionnels selon la revendication 9, contenant 15 à 95 parties en poids du polyisocyanate hautement fonctionnel modifié et de 85 à 5 parties en poids de diisocyanate de toluylène et le cas échéant des monomères et/ou des polymères du mélange d'isocyanate mis en oeuvre.

11. Polyisocyanates aromatiques hautement fonctionnels selon la revendication 9 ou 10, contenant au maximum 8 parties en poids d'urée et des oligomères de poids moléculaires élevés et au maximum 2 parties en poids d'uret-dione et d'oligomères de poids moléculaire élevé.

12. Polyisocyanates aromatiques hautement fonctionnels selon l'une des revendications 9 à 11, **caractérisés en ce qu'**ils présentent une teneur de 35 à 39 % en poids de groupes NCO libres, une viscosité de 3 à 6000 mPa.s à 25 °C, une fonctionnalité moyenne de 2,6 à 3,2, un poids moléculaire moyen de 300 à 600 g/mol et un indice colorimétrique maximum de 10 jod.

13. Utilisation des polyisocyanates aromatiques hautement fonctionnels selon l'une des revendications 9 à 12 pour la production de mousses de polyuréthane, en particulier de mousses de polyuréthane souples.

14. Procédé pour la production de mousses de polyuréthane souples par réaction de polyisocyanates organiques et/ou organiques modifiés (a) avec des composés présentant des atomes d'hydrogène réactionnels vis-à-vis d'isocyanates (b) en présence d'eau et/ou d'autres gaz propulseurs (c), de catalyseurs (d) et le cas échéant d'autres additifs et adjuvants (e), **caractérisé en ce que** les polyisocyanates (a) contiennent au moins un polyisocyanate aromatique hautement fonctionnel selon l'une des revendications 9 à 12.

15. Mousses de polyuréthane souples, pouvant être produites selon la revendication 14, **caractérisées en ce qu'**elles présentent une densité brute de 30 à 60 kg/m³ pour une teneur en eau totale de 2 à 8 parties en poids et un indice d'isocyanate de 75 à 115.

16. Utilisation des mousses de polyuréthane souples selon la revendication 15 dans les secteurs de l'industrie automobile et de l'ameublement.
